# EUROPEAN PATENT APPLICATION

(11) **EP 4 253 158 A1**
(43) Date of publication of application: **04.10.2023**
(21) Application number: 21897767.6
(22) Date of filing: 15.11.2021
(51) Int. Cl.: B60R 13/08, B62D 25/18, G10K 11/16

(54) **FENDER LINER, METHOD FOR MANUFACTURING SAME, AND VEHICLE**

(30) Priority: 25.11.2020 JP 2020194962
(71) Applicant: AGC INC., Chiyoda-ku, Tokyo 1008405 (JP)
(72) Inventor: SHIMOSAKA, Takamichi, Tokyo 100-8405 (JP); TAKADA, Takashi, Tokyo 100-8405 (JP); KODAMA, Kotaro, Tokyo 100-8405 (JP); FUJIWARA, Yukihiro, Tokyo 100-8405 (JP)
(74) Representative: Müller-Boré & Partner Patentanwälte PartG mbB
(86) International application number: PCT/JP2021/041850
(87) International publication number: WO 2022/113793

(57) **Abstract**

A fender liner that is to be placed in a curved shape along a periphery of a tire of a vehicle includes:
a first foam layer that is formed by a first foam body; and
a second foam layer that is formed by a second foam body, the second foam body having a composition different from a composition of the first foam body,
wherein the first foam layer and the second foam layer are arranged in a circumferential direction of the tire.

## Description

### TECHNICAL FIELD

The disclosures herein relate to a fender liner, a manufacturing method of the fender liner, and a vehicle.

### BACKGROUND ART

A fender liner is placed in a curved shape along a periphery of a tire of a vehicle and prevents debris such as pebbles that get kicked up while a vehicle is traveling from colliding with the vehicle. Further, the fender liner includes a non-woven fabric and the like and absorbs travel noise of the vehicle, collision noise of debris, and the like (see Patent Document 1, for example).

### RELATED-ART DOCUMENTS

### PATENT DOCUMENTS

Patent Document 1: Japanese Unexamined Patent Application Publication No. 2015-17339

### SUMMARY OF THE INVENTION

### PROBLEM TO BE SOLVED BY THE INVENTION

The inventors of the present disclosure examined the relationship between the frequency of sound waves and the magnitude of the sound waves observed in the vicinity of the fender liner while a vehicle is traveling and discovered that the characteristics of sound waves differ in the circumferential direction of the tire.

One aspect of the present disclosure provides a technique for reducing the magnitude of noise over a wide frequency band by using a fender liner.

### MEANS TO SOLVE THE PROBLEM

A fender liner that is to be placed in a curved shape along a periphery of a tire of a vehicle according to one aspect of the present disclosure includes:
a first foam layer that is formed by a first foam body; and
a second foam layer that is formed by a second foam body, the second foam body having a composition different from a composition of the first foam body,
wherein the first foam layer and the second foam layer are arranged in a circumferential direction of the tire.

### EFFECTS OF THE INVENTION

According to one aspect of the disclosure, the sound absorption characteristic of the fender liner can be changed in the circumferential direction of a tire, and thus the magnitude of the noise over a wide frequency band can be reduced by using the fender liner.

### BRIEF DESCRIPTION OF THE DRAWINGS

[FIG. 1] FIG. 1 illustrates a lower structure of a vehicle to which a fender liner according to an embodiment is installed;
[FIG. 2] FIG. 2 is a flowchart illustrating a manufacturing method of manufacturing a fender liner according to an embodiment;
[FIG. 3] FIG. 3 is a cross-sectional of an example of step S102 of FIG. 2;
[FIG. 4] FIG. 4 is a cross-sectional view of an example of step S105 of FIG. 2;
[FIG. 5] FIG. 5 is a cross-sectional view of an example of step S106 of FIG. 2;
[FIG. 6] FIG. 6 is a diagram illustrating sound absorption characteristics of a foam body A and a foam body B used in Examples 1 to 3; and
[FIG. 7] FIG. 7 is a diagram illustrating an infrared absorption spectra of the foam body A and the foam body B used in Examples 1 to 3.

### MODE FOR CARRYING OUT THE INVENTION

In the following, embodiments of the disclosure are described with reference to the drawings. Throughout the drawings, the same elements are assigned the same reference numerals and duplicated descriptions may be omitted. Also, in this specification, a numerical range expressed using "to" includes the lower limit value and the upper limit value before and after "to".

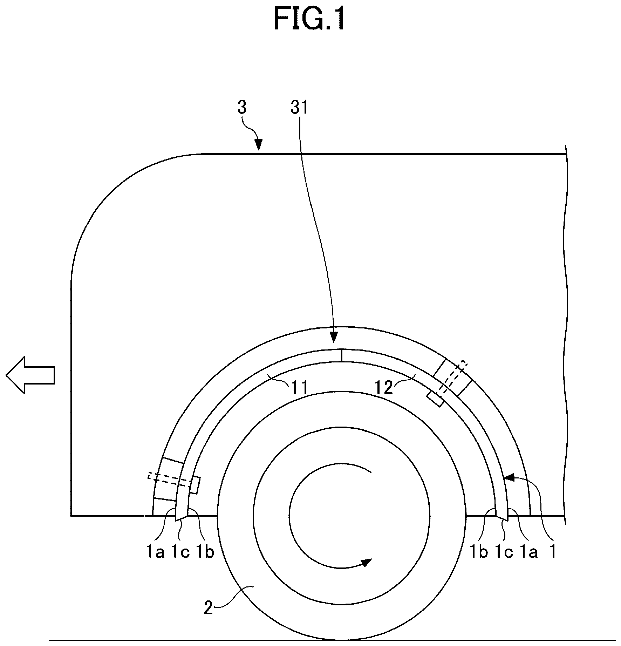

First, a fender liner 1 according to an embodiment is described with reference to FIG. 1. In FIG. 1, the outlined arrow indicates the direction in which the vehicle is moving in, the left side is the front of the vehicle, and the right side is towards the rear of the vehicle.

The fender liner 1 is placed inside a tire house 31. The tire house 31 is a space in which a tire 2 of a vehicle body 3 is accommodated. The fender liner 1 is placed in a curved shape along the periphery of the tire 2. The fender liner 1 forms a gap between the fender liner 1 and the tire 2. The gap is greater than or equal to a predetermined gap, and thus the fender liner 1 and the tire 2 can be prevented from coming into contact with each other.

The fender liner 1 prevents debris such as pebbles that get kicked up while the vehicle is traveling from colliding with the vehicle body 3. Also, the fender liner 1 absorbs travel noise of the vehicle, collision noise of debris, and the like. The fender liner 1 is attached to the vehicle body 3 by, for example, pins and washers.

When the inventors of the present disclosure examined the relationship between the frequency and magnitude of sound waves observed in the vicinity of the fender liner 1 while the vehicle was travelling, the inventors discovered that the characteristics of the sound waves differ in the circumferential direction of the tire 2. As is described in greater detail in the Examples section, in a case where the frequency of the sound waves was 1,250 Hz or less, the magnitude of the sound waves (noise) in the frontward area of the tire 2 relative to the top of the tire 2 was greater than in rearward area of the tire 2 relative to the top of the tire 2. However, in a case where the frequency of the sound waves exceeded 1,250 Hz, the magnitude of the sound waves (noise) in rearward area of the tire 2 relative to the top of the tire 2 was greater than in the frontward area. From these observations, the inventors of the present disclosure discovered that the place where the magnitude of the sound was the greatest changed in the circumferential direction of the tire 2 in accordance with the frequency of the sound waves.

It is to be noted that the characteristics of the sound waves observed in the vicinity of the fender liner 1 can vary depending on the shape and dimensions of the fender liner 1, the number of revolutions or the tread pattern of the tire 2, and the like. However, it is thought that that the tendency for the place, where the magnitude of the sound is the greatest, to change in the circumferential direction of the tire 2 in accordance with the frequency of the sound waves, does not change even when the shape or dimensions of the fender liner 1, or the number of revolutions or the tread pattern of the tire 2, or the like, changes.

Therefore, as illustrated in FIG. 1, the fender liner 1 includes at least a first foam layer 11 and a second foam layer 12. The first foam layer 11 is formed by a first foam body. In contrast to this, the second foam layer 12 is formed by a second foam body having a composition different from that of the first foam body.

The difference between the composition of the first foam body and the composition of the second foam body can be confirmed by the difference between the infrared absorption spectra of the first foam body and the infrared absorption spectra of the of the second foam body. The infrared absorption spectra is measured in accordance with the Japanese Industrial Standard JIS K 0117:2017 and is measured by the total reflectance method (ATR method). A difference between the infrared absorption spectra of the first foam body and the infrared absorption spectra of the second foam body means, for example, that different peaks are observed or that, when performing measurement at a resolution of 4 cm⁻¹, the wavenumber of the peak deviates by 20 cm⁻¹ or more, 20 cm⁻¹ being five times greater in resolution. In addition, even when the peak wavenumbers are the same, it can be determined that the compositions are different if the ratio of the intensity of one peak to the intensity of the other peak is different.

According to this embodiment, the first foam layer 11 and the second foam layer 12 having compositions different from each other are arranged in the circumferential direction of the vehicle tire 2. Therefore, the sound absorption characteristics of the fender liner 1 can be changed in the circumferential direction of the tire 2, and thus the magnitude of the noise can be reduced in a wide frequency band by using the fender liner 1.

For example, the first foam layer 11 has a lower peak frequency of a sound absorption coefficient than that of the second foam layer 12, and the first foam layer 11 is situated closer to the front of the vehicle than the second foam layer 12 is. The magnitude of sound in a wide frequency band can be reduced by using the fender liner 1 in a case where the magnitude of the sound with a low frequency is greater in the frontward area relative to the top of the tire 2 than the rearward area relative to the top of the tire 2.

It should be noted that the first foam layer 11 may have a higher peak frequency of a sound absorption coefficient than that of the second foam layer 12 and may be positioned closer to the front of the vehicle than the second foam layer 12 is. The magnitude of noise in a wide frequency band can be reduced by using the fender liner 1 in a case where the magnitude of the sound with a high frequency is greater in the frontward area relative to the top of the tire 2 than in the rearward area relative to the top of the tire 2.

Although not illustrated, the fender liner 1 may be situated with a third foam layer between the first foam layer 11 and the second foam layer 12 along the tire 2 in the circumferential direction of the tire 2. The third foam layer is formed by a third foam body having a mixed composition of the first foam body and the second foam body. It can be confirmed that composition of the third foam body is a mixed composition of the first foam body and the second foam body by the fact that the infrared absorption spectra of the third foam body is between the infrared absorption spectra of the first foam body and the infrared absorption spectra of the second foam body.

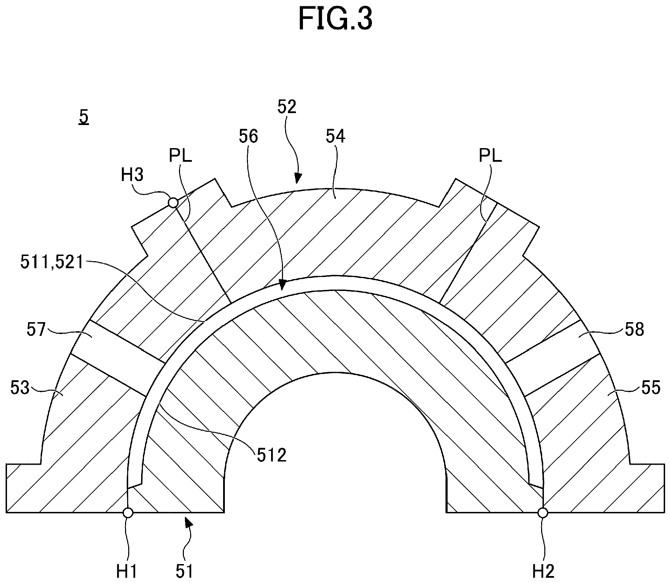

The fender liner 1 is obtained, as described further below, by injecting both a first resin composition that forms the first foam body and a second resin composition that forms the second foam body into an inner space 56 of the shaping mold 5 illustrated in FIG. 3 and so on, foaming both the first resin composition and the second resin composition, and solidifying both the first resin composition and the second resin composition. The third foam layer is formed at the point where the first resin composition and the second resin composition merge.

The existence of the third foam layer means that the first foam layer 11 and the second foam layer 12 are formed at the same time in the inner space 56 of the shaping mold 5. In such a case, the number of steps in a process can be reduced and the manufacturing cost of the fender liner 1 can be reduced compared to a case where the first foam layer 11 and the second foam layer 12 are formed separately and then joined together with an adhesive or the like.

Next, referring back to FIG. 1, the first foam layer 11 and the second foam layer 12 that are included in the fender liner 1 are described.

First, the first foam layer 11 is described. The first foam layer 11 has a three-dimensional net-shaped skeletal structure, unlike the non-woven fabric. The first foam layer 11 includes numerous bubbles inside. The numerous bubbles are connected to one another, and thus sound waves propagate inside the first foam layer 11. At such timing, air inside the first foam layer 11 vibrates. Friction occurs between the three-dimensional net-shaped skeletal structure of the first foam layer 11 and the air, and in turn, energy of the sound waves gets converted into thermal energy. As a result of this, the sound is absorbed. The noise level outside of the vehicle and the noise level inside of the vehicle can be reduced.

In contrast to conventional non-woven fabric that includes fibers that are two-dimensionally oriented, the first foam layer 11 has a three-dimensionally extended net-shaped skeletal structure. Therefore, the first foam layer 11 can enhance the sound absorption coefficient in comparison to the non-woven fabric. Also, since the first foam layer 11 has the three-dimensionally extended net-shaped skeletal structure and is continuously connected, shape retention can be enhanced.

The first foam layer 11 is, for example, a polyurethane foam body. The polyurethane foam body is what is known as a polyurethane foam, and is obtained by foaming and solidifying a first resin composition that includes a polyisocyanate, a polyol, a catalyst, and a foaming agent. The foaming agent includes water. The foaming agent may include chlorine. The details of the first resin composition are described further below.

In the present embodiment, the first foam layer 11 is a foam body of polyurethane, but the first foam layer 11 may be a polyacrylic foam body, a melamine foam body, a rubber foam body, a polyolefin foam body, or a polyimide foam body. These materials including polyurethane are excellent in terms of lightness and shape retention.

From the standpoint of both lightness and sound absorption performance, the first foam layer 11 has a thickness of, for example, 3 mm to 30 mm, and preferably 3 mm to 20 mm.

From the standpoint of both lightness and sound absorption performance, the first foam layer 11 has a density of, for example, 20 kg/m³ to 140 kg/m³. The density of the first foam layer 11, what is known as bulk density, is measured in compliance with the Japanese Industrial Standard, JIS K 7222:2005 "Cellular plastics and rubbersDetermination of apparent (bulk) density". The density of the first foam layer 11 is preferably 30 kg/m³ to 130 kg/m³, and more preferably 55 kg/m³ to 120 kg/m³.

The sound absorption coefficient of the first foam layer 11 is, for example, 0.4 to 1.0. A sample having a thickness of 10 mm of the first foam layer 11 is cut and sound waves of 1,000 Hz are perpendicularly incident on the sample, and the sound absorption coefficient of the first foam layer 11 is measured in compliance with Japanese Industrial Standard, JIS A 1405-2:2007 "Determination of sound absorption coefficient and impedance in acoustic tubes". The sound absorption coefficient of the first foam layer 11 is preferably 0.5 to 1.0. A sound absorption coefficient of 1.0 means that none of the sound is reflected.

Next, the second foam layer 12 is described. The second foam layer 12 has a three-dimensional net-shaped skeletal structure as is the case for the first foam layer 11. Therefore, the second foam layer 12 can enhance the sound absorption coefficient in comparison to the non-woven fabric. Also, since the second foam layer 12 has the three-dimensionally extended net-shaped skeletal structure and is continuously connected, shape retention can be enhanced.

The second foam layer 12 is, for example, a polyurethane foam body. The polyurethane foam body is what is known as a polyurethane foam, and is obtained by foaming and solidifying a second resin composition that includes a polyisocyanate, a polyol, a catalyst, and a foaming agent. The foaming agent includes water. The foaming agent may include chlorine. The composition of the second resin composition is different from the composition of the first resin composition. The details of the second resin composition are described further below.

In the present embodiment, the second foam layer 12 is a foam body of polyurethane, but the second foam layer 12 may be a polyacrylic foam body, a melamine foam body, a rubber foam body, a polyolefin foam body, or a polyimide foam body. These materials including polyurethane are excellent in terms of lightness and shape retention.

From the standpoint of both lightness and sound absorption performance, the second foam layer 12 has a thickness of, for example, 3 mm to 30 mm, and preferably 3 mm to 20 mm.

From the standpoint of both lightness and sound absorption performance, the second foam layer 12 has a density of, for example, 20 kg/m³ to 140 kg/m³. The density of the second foam layer 12, what is known as bulk density, is measured in compliance with the Japanese Industrial Standard, JIS K 7222:2005 "Cellular plastics and rubbersDetermination of apparent (bulk) density". The density of the second foam layer 12 is preferably 30 kg/m³ to 130 kg/m³, and more preferably 55 kg/m³ to 120 kg/m³.

The sound absorption coefficient of the second foam layer 12 is, for example, 0.4 to 1.0. A sample having a thickness of 10 mm of the second foam layer 12 is cut and sound waves of 1,000 Hz are perpendicularly incident on the sample, and the sound absorption coefficient of the second foam layer 12 is measured in compliance with Japanese Industrial Standard, JIS A 1405-2:2007 "Determination of sound absorption coefficient and impedance in acoustic tubes". The sound absorption coefficient of the second foam layer 12 is preferably 0.5 to 1.0.

The difference between the frequency of the peak of sound absorption of the second foam layer 12 and the frequency of the peak of sound absorption of the first foam layer 11, is for example, 1/3 octave or higher, preferably 2/3 octave or higher, or 1 octave or higher. Also, this difference is, for example, 7/3 octave or lower or preferably 2 octaves or lower.

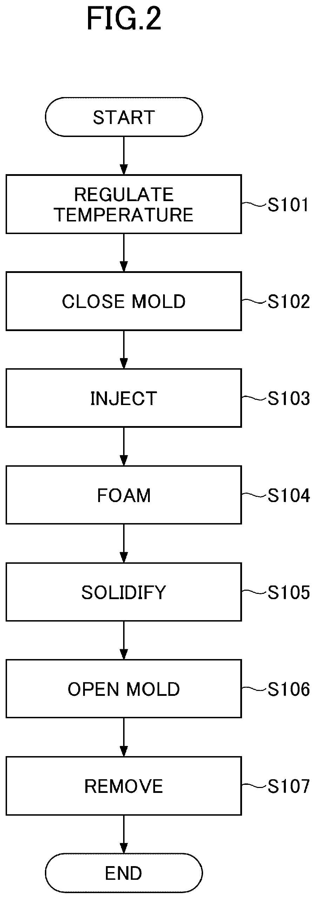

Next, a manufacturing method of the fender liner according to an embodiment is described with reference to FIG. 2. The manufacturing method of the fender liner 1 includes, for example, step S101 to step S107 in FIG. 2. In the present embodiment, the shaping mold 5 illustrated in FIG. 3 to FIG. 5 is used. The shaping mold 5 is a metal mold owing to the controllability. The shaping mold 5 may be a sand mold, a wooden mold, or a resin mold.

First, the shaping mold 5 is temperature regulated in step S101. The temperature regulation of the shaping mold 5 may be continued in subsequent steps. It is sufficient as long as temperature regulation (step S101) is started prior to injection (step S103). It is sufficient as long as the temperature of the shaping mold 5 is stabilized prior to injection (step S103).

The temperature of the shaping mold 5 is temperature regulated such that the temperature is 50 degrees Celsius to 70 degrees Celsius. The inside of the shaping mold 5 has formed therein a channel through which a temperature regulating medium such as water flows. It should be noted that an electric heater or the like may be embedded inside the shaping mold 5.

As long as the temperature of the shaping mold 5 is 50 degrees Celsius or more, the polymerization reaction and foaming reaction can advance. Further, as long as the temperature of the shaping mold 5 is 70 degrees Celsius or less, the reaction rate can be appropriately restrained, solidification can be mitigated such that solidification is not completed prior to the resin permeating the entirety of the inner space 56 of the shaping mold 5, and thus an occurrence of a phenomenon where there is insufficient filling, that is, a short-shot, can be mitigated.

It should be noted the temperature distribution of the shaping mold 5 may be uniform or may be non-uniform. In the case of the latter, the polymerization reaction and foaming reaction of the first resin composition and the second resin composition can be adjusted by the temperature difference.

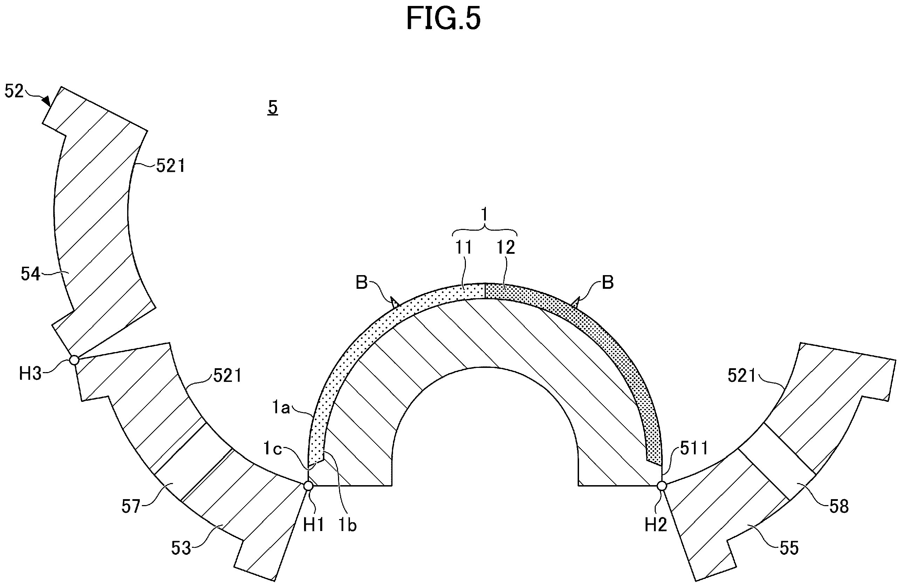

Next, in step S102, a lower mold 51 and an upper mold 52 constituting the shaping mold 5 are closed as illustrated in FIG. 3. Specifically, the shaping mold 5 is closed by moving the upper mold 52 from the open position (see FIG. 5) to the closed position (see FIG. 3). Upon completion of the closing of the mold, the inner space 56 is formed between the lower mold 51 and the upper mold 52. The inner space 56 is a space in which the fender liner 1 is formed.

The shaping mold 5 is parted into the lower mold 51 and the upper mold 52. The upper mold 52 is placed on top of the lower mold 51. The upper mold 52 is further parted into multiple parted molds 53 to 55. It should be noted that the lower mold 51 and the upper mold 52 are also parted molds of the shaping mold 5. These boundary lines of these parted molds are referred to as parting lines PL of the shaping mold 5.

The lower mold 51 is a fixed-type mold. The lower mold 51 has an upper surface 511 and a recess 512. The upper surface 511 protrudes upwardly. The recess 512 is formed in the upper surface 511. The recess 512 is formed to have a predetermined depth from the upper surface 511 of the lower mold 51.

In contrast to this, the upper mold 52 is a movable-type mold. The upper mold 52 has a lower surface 521. The lower surface 521 of the upper mold 52 comes into contact with the upper surface 511 of the lower mold 51. Although not illustrated, the lower surface of the upper mold 52 may be formed with a second recess, and a resin composition may be formed inside of the second recess. Either or both of the first foam layer 11 and the second foam layer 12 can be made thicker at certain portions thereof. The number of the second recesses is one or more.

The upper mold 52 protrudes upwardly in an arch shape and is parted into three parted molds 53 to 55 in the circumferential direction of the upper mold 52. The parted molds 53 and 55 that are on both ends are linked to the lower mold 51 by different hinges H1 and H2, respectively. The parted mold 53 on one end rotates about hinge H1 and rotates between the closed position (see FIG. 3) and the open position (see FIG. 5). Also, the parted mold 55 on the other end rotates about hinge H2 and rotates between the closed position (see FIG. 3) and the open position (see FIG. 5).

The parted mold 54 in the middle is linked to one of the two parted molds 53 and 55 on both ends (for example, parted mold 53) by a hinge H3. The parted mold 54 in the middle rotates about hinge H3 and rotates between the closed position (see FIG. 3) and the open position (see FIG. 5) with respect to the parted mold 53 on one end.

Although the upper mold 52 is parted into three parted molds 53 to 55 in the present embodiment, the upper mold 52 may be parted into two parted molds or may be parted into four or more parted molds. The number of parts in the upper mold 52 is not particularly limited.

The upper mold 52 is parted into multiple parted molds 53 to 55 as described above. The multiple parted molds 53 to 55 may be moved individually, and the movement range of the upper mold 52 can be configured to be small in comparison to a case where the entirety of the upper mold 52 is moved at once.

Next, in step S103, a first resin composition is injected from a first injection opening 57 into the inner space 56 of the shaping mold 5 that was closed in step S102. Also, in step S103, a second resin composition is injected from a second injection opening 58 into the inner space 56 of the shaping mold 5 that was closed in step S102. The first injection opening 57 and the second injection opening 58 are spaced apart from each other in the circumferential direction of the tire 2.

The inner space 56 of the shaping mold 5 protrudes upwardly in an arch shape. The first resin composition flows down to one of the bottom ends of the arch-shaped inner space 56 whereas the second resin composition flows down to the other bottom end of the arch-shaped inner space 56.

The injection of the first resin composition and the injection of second resin composition may be performed at the same time or may be performed at different times. It is sufficient as long as the first resin composition and the second resin creature merge in a softened state.

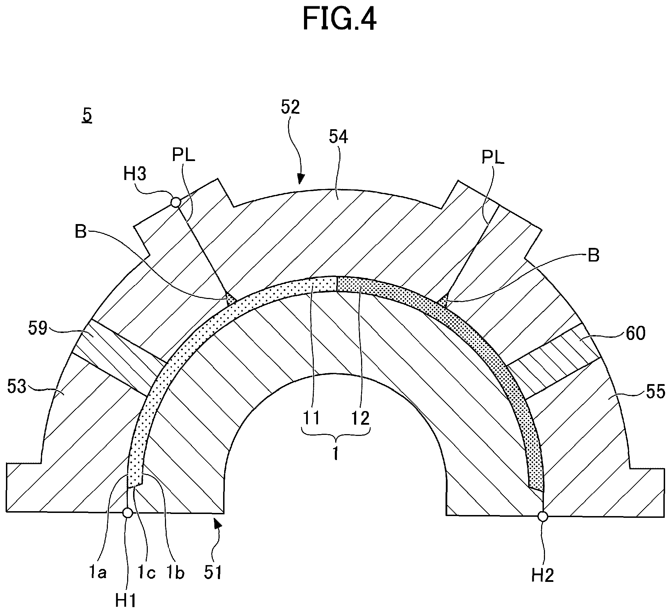

After injection of the first resin composition, a first plug 59 is inserted into the first injection opening 57 as illustrated in FIG. 4, and thus the first injection opening 57 sealed by the first plug 59. Also, after injection of the second resin composition, a second plug 60 is inserted into the second injection opening 58, and thus the second injection opening 58 is sealed by the second plug 60.

Next, in step S104, the first resin composition and the second resin composition are foamed inside the inner space 56 of the shaping mold 5. At this timing, gas is generated. The generated gas pushes the gas of the inner space 56 to the outside of the shaping mold 5 from the parting lines PL of the shaping mold 5. At such timing, the resin composition enters the parting line PL together with the gas, cools, and then hardens. This will cause what is known as burrs B to occur.

The parting lines PL of the present embodiment are not arranged on a facing surface 1b of the fender liner 1 facing the tire 2. Therefore, burrs B do not occur on the facing surface 1b of the fender liner 1 facing the tire 2. Hence, interference between burrs B and the tire 2 can be prevented. The burrs B forms on surface 1a of the fender liner 1 opposite to where the tire 2 is provided.

Next, in step S105, the foamed resin composition is solidified as illustrated in FIG. 4, the first resin composition and the second resin composition that were foamed are solidified. The term solidification encompasses curing. In step S105, the fender liner 1 equipped with the first foam layer 11 and the second foam layer 12 is obtained upon the solidification of the resin composition. Although not illustrated, a third foam layer is formed between the first foam layer 11 and the second foam layer 12.

The first foam layer 11 and the second foam layer 12 are connected via the non-illustrated third foam layer near the upper end of the arch-shaped inner space 56. It should be noted that the position of the boundary (third foam layer) between the first foam layer 11 and the second foam layer 12 can be changed in the circumferential direction of the tire 2 by changing the injection amount of the first resin composition and the injection amount of the second resin composition. Also, the positioning of the shaping mold 5 may be vertically inverted. Even in the case where the positioning of the shaping mold 5 is vertically inverted, the first injection opening 57 and the second injection opening 58 are provided above the inner space 56.

In any case, the fender liner 1 is formed to have the same shape and the same dimensions as the inner space 56 of the shaping mold 5.
Therefore, the fender liners 1 having the shape and the same dimensions can be mass produced.

Also, since the shape and dimensions of the fender liner 1 are determined by the shape and dimensions of the inner space 56 of the shaping mold 5, an intricate structure can also be imparted and downstream steps such as cutting or pressing are not necessary.

Furthermore, the number of processes can be reduced and the manufacturing costs of the fender liner 1 can be reduced compared with a case where the first foam layer 11 and the second foam layer 12 included in the fender liner 1 are formed separately and bonded with adhesive or the like.

Next, in step S106, the lower mold 51 and the upper mold 52 are opened as illustrated in FIG. 5. Specifically, the shaping mold 5 is opened by moving the upper mold 52 from the closed position (see FIG. 3) to the open position (see FIG. 5).

Lastly, in step S107, the fender liner 1 is removed from the shaping mold 5 after the shaping mold 5 is opened. The fender liner 1 may include a tapered surface 1c that is tapered toward where the tire 2 is provided (radially inward toward the tire 2). The tapered surface 1c is inclined with respect to the radial direction of the tire 2. The fender liner 1 readily separates from the lower mold 51 owing to the tapered surface 1c, and thus any damage during mold separation can be mitigated.

In a case where the fender liner 1 has excellent flexibility, the tapered surface 1c is not necessary. In such a case, the fender liner 1 deforms as the mold separation is performed.

The manufacturing method of the fender liner 1 may include steps other than step S101 to step S107 in FIG. 2. For example, the manufacturing method of the fender liner 1 may include a step of forming a water repellent layer on the facing surface 1b of the fender liner 1 facing the tire 2 after removing the fender liner 1 from the shaping mold 5.

The water repellent layer causes water droplets scattered by the tire 2 to readily slide off the water repellent layer. Therefore, water droplets are substantially prevented from remaining on the water repellent layer, and thus a film of ice is substantially prevented from forming. If a film of ice is prevented from getting formed, damage that would result from film of ice coming off does not occur. The water repellent layer is formed by, for example, fluorine based, silicone based, or low polarity hydrocarbon based coating agents such as polyethylene or polypropylene.

The water-repellent layer may be breathable. Compared with the case where the water-repellent layer is not breathable, sound waves such as the travel noise of the tire 2 readily enters the inside of the fender liner 1. Therefore, reflection of sound waves can be substantially prevented. The breathable water repellent layer is formed, for example, by a spray coating method in which a fluorine based, silicone based, or a hydrocarbon based coating agent is used. The hydrocarbon based coating agent preferably includes a low polarity polyethylene, a low polarity polypropylene, or the like.

Next, the first resin composition that is the raw material of the first foam body is described. In a case where the first foam body is a polyurethane foam, the first resin composition includes a polyisocyanate, a polyol, a catalyst, and a foaming agent. The first resin composition may further include an additive. The first resin composition is normally prepared by mixing a system liquid including a raw material other than a polyisocyanate together with a polyisocyanate.

The polyisocyanate may be, for example, tolylene diisocyanate (TDI), methylene diphenyl diisocyanate (MDI), polymethylene polyphenyl isocyanate (what is known as crude MDI), xylylene diisocyanate (XDI), isophorone diisocyanate (IPDI) or hexamethylene diisocyanate (HMDI), or may be a prepolymer type modified product, an isocyanurate modified product, a urea modified product, or a carbodiimide modified product of the above polyisocyanates although not limited thereto. The TDI may be 2,4-TDI, 2,6-TDI, or a mixture of both. MDI may be 2,2'-MDI, 2,4'-MDI, 4,4'-MDI, or a mixture of two or three of these types.

Examples of the polyols include polyoxyalkylene polyol, polyester polyol, and the like.

Examples of the foaming agent include water although not limited thereto. As an example of a foaming agent other than water, an inert compound with a low boiling point is preferable. Examples of such an inert compound include, for example, an inert gas and a saturated hydrocarbon having 8 or less carbons with a boiling point of 70 degrees Celsius or less in which hydrogens bonded to carbon may be substituted with a halogen element. The halogen atom is, for example, a fluorine atom or a chlorine atom. Examples of the saturated hydrocarbon include butane, pentane, dichloromethane (methylene chloride), trichloroethane, and various chlorofluorocarbon compounds although not limited thereto. Also, one type of the foaming agent may be used individually or two or more types of the foaming agent may be used in combination.

The catalyst is at least one type selected from the group consisting of an amine catalyst and a tin catalyst. One type of the catalyst may be used individually or two or more types of the foaming agent may be used in combination. Examples of the amine catalyst include triethylenediamine; bis (2-dimethylaminoethyl) ether; N,N,N',N'-tetramethylhexamethylenediamine; N,N-dimethylaminoethoxyethoxy ethanol; N,N-dimethylamino-6-hexanol; N,N-dimethylaminoethoxy ethanol; a compound in which 2 mol of ethylene oxide is added to N,N-dimethylaminoethoxy ethanol; and 5-(N,N-dimethyl)amino-3-methyl-1-pentanol although not limited thereto. Examples of the tin catalyst include tin(II) 2-ethylhexanoate; di-n-butyltin oxide; di-n-butyltin dilaurate; di-n-butyltin diacetate; di-n-octyltin oxide; di-n-octyltin dilaurate; monobutyltin trichloride; di-n-butyltin dialkyl mercaptan; and di-n-octyltin dialkyl mercaptan although not limited thereto.

A foam stabilizer may be included as the additive. Examples of the foam stabilizer include a silicone foam stabilizer and a fluorinated compound foam stabilizer although not limited thereto. One type may be used individually or two or more types of the foaming stabilizer may be used in combination.

A crosslinking agent may be included as the additive. A compound having at least two active hydrogen-containing groups selected from hydroxyl groups, primary amino groups, and secondary amino groups may be selected. Examples of the crosslinking agent include ethylene glycol, propylene glycol, 1,4-butanediol, neopentyl glycol, 1,6-hexanediol, diethylene glycol, triethylene glycol, dipropylene glycol, glycerin, trimethylolpropane, pentaerythritol, diglycerin, monoethanolamine, diethanolamine, triethanolamine, bisphenol A, ethylenediamine, 3,5-diethyl-2,4-diaminotoluene, 3,5-diethyl-2,6-diaminotoluene, 2-chloro-p-phenylenediamine, 3,5-bis(methylthio)-2,4-diaminotoluene, 3,5-bis(methylthio)-2,6-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl) methane, 4,4'-diaminodiphenylmethane, m-xylenediamine, 1,4-diaminohexane, 1,3-bis(aminomethyl)cyclohexane and isophorone diamine although not limited thereto. Also, the aforementioned polyoxyalkylene polyol with a molecular weight/number of hydroxyl groups that is less than 500 may also be used as the crosslinking agent. One type of the crosslinking agent may be used individually or two or more types of the crosslinking agent may be used in combination.

Examples of other additives include various publicly known additives and adjuvants such as emulsifiers, antioxidants, anti-aging agents such as ultraviolet absorbers, filling agents such as calcium carbonate, barium sulfate, and the like, plasticizers, colorants, flame retardants, antifungal agents, and foam breakers although not limited thereto. Additives conventionally used in polyurethane foams can be used.

Next, the second resin composition that is the raw material of the second foam body is described. In a case where the second foam body is a polyurethane foam, the second resin composition includes a polyisocyanate, a polyol, a catalyst, and a foaming agent, as is the case with the first resin composition. The second foam resin composition may further include an additive. The second resin composition is prepared by mixing together the same materials as the first resin composition at a blending ratio different from that of the first resin composition, or is prepared using materials different from those of the first resin composition.

### (Example)

The experimental data is described below. Example 1 and Example 2 are Comparative Examples. Example 3 is a Practical Example. First, the foam body A and foam body B used in In Example 1 to Example 3 are described. A resin composition A that is the material of the foam body A was prepared by putting 109.3 parts by mass of a system liquid A and 39.3 parts by mass of polyisocyanate (mixture of TDI and MDI; Product name: Coronate 1021; manufactured by Tosoh) in a container and mixing the contents of the container together by a high-speed mixer at room temperature. The system liquid A included 60 parts by mass of a polyoxyalkylene polyol 1 (Product name: EXCENOL 820; manufactured by AGC Inc.), 40 parts by mass of a polyoxyalkylene polyol 2 (Product name: EXCENOL 923; manufactured by AGC Inc.), 3 parts by mass of water that is a foaming agent, 0.3 parts by mass of a catalyst 1 (Product name: TEDA L-33; manufactured by Tosoh Corporation), 0.05 parts by mass of a catalyst 2 (Product name: TOYOCAT-ET; manufactured by Tosoh Corporation) 3 parts by mass of a foam stabilizer 1 (Product name: Tegostab B8737LF2; manufactured by Evonik Industries, and 3 parts by mass of a crosslinking agent 1 (Product name: EXCENOL 555; manufactured by AGC. Inc.).

A resin composition B that is the material of the foam body B was prepared by putting 142.4 parts by mass of a system liquid B and 42.4 parts by mass of polyisocyanate (mixture of TDI and MDI; Product name: Coronate 1021; manufactured by Tosoh) in a container and mixing the contents of the container together by a high-speed mixer at room temperature. The system liquid B included 60 parts by mass of the aforementioned polyoxyalkylene polyol 1, 40 parts by mass of the aforementioned polyoxyalkylene polyol 2, 30 parts by mass of a polyoxyalkylene polyol 3 (Product name: Poly(tetramethylene oxide) 2,000; manufactured by FUJIFILM Wako Pure Chemical Corporation); 3 parts by mass of a foaming agent, 0.3 parts by mass of the aforementioned catalyst 1, 0.05 parts by pass of the aforementioned catalyst 2, 3 parts by mass of the aforementioned foam stabilizer 1, 3 parts by mass of a colorant (Product name: FTR-5570; manufactured by Dainichiseika Color & Chemicals Mfg. Co., Ltd.), and 3 parts by pass of the aforementioned crosslinking agent 1.

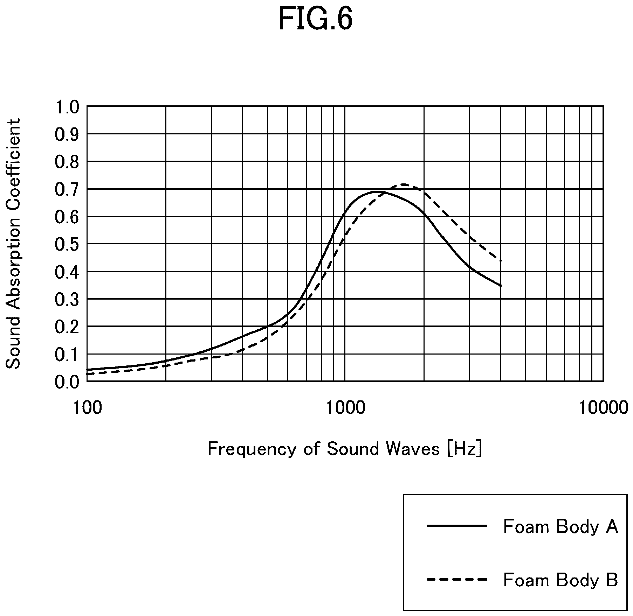

The resin composition A was injected, foamed, and solidified, a test piece consisting of only the foam body A was produced, and a frequency dependence of a normal incident sound absorption coefficient of the test piece was measured. Also, the resin composition B was injected, foamed, and solidified, a test piece consisting of only the foam body B was produced, and a frequency dependence of a normal incident sound absorption coefficient of the test piece was measured. These measurements were performed using WinZacMTX manufactured by Nihon Onkyo Engineering Co., Ltd. These measurement results are indicated in FIG. 6. As illustrated in FIG. 6, a peak frequency of the sound absorption coefficient of the foam body A was lower than that of the foam body B. The difference between the frequency of the sound absorption peak of the foam body A and the frequency of the sound absorption peak of the foam body B was 1/3 octave.

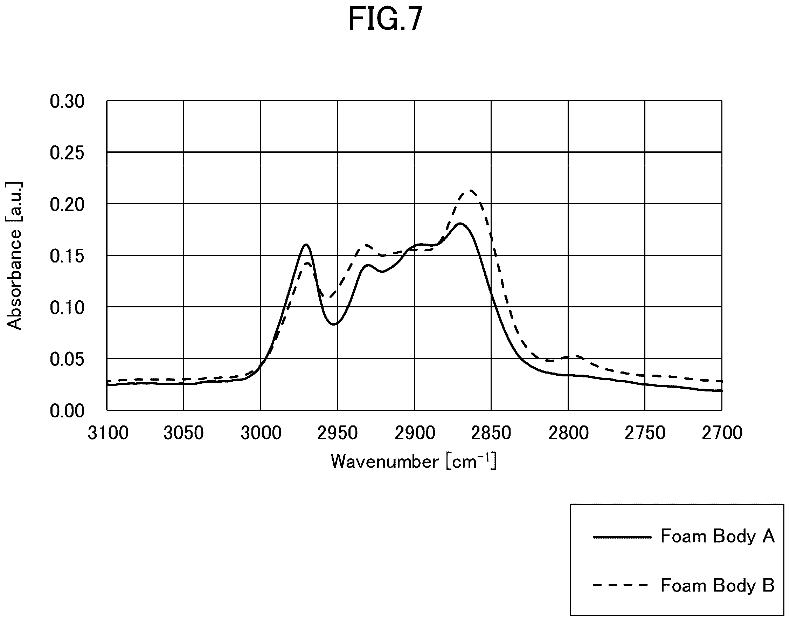

The infrared absorption spectra of the foam body A and the foam body B are illustrated in FIG. 7. The measurements were performed using infrared spectrometer (FT-IR; Product Name: Nicolet 1Z10; manufactured by Thermo Fisher Scientific K.K.). The absorbance was normalized by the maximum value of the absorbance measured from 800 cm⁻¹ to 4,000 cm⁻¹. In FIG. 7, only a wavenumber range of 2,700 cm⁻¹ to 3,100 cm⁻¹ is illustrated. Infrared absorbance derived from C-H bonds of hydrocarbons in the wavenumber range of 2,700 cm⁻¹ to 3,100 cm⁻¹ was observed. The number of scans was 32 times and the resolution was 4 cm⁻¹.

In the infrared absorption spectra of the foam body A and the foam body B illustrated in FIG. 7, a peak was observed near 2,800 cm⁻¹ for only the foam body B, and thus it can be determined that the compositions are different. Also, given that the peak intensity ratio near 2,870 cm⁻¹ and the peak intensity ratio near 2,970 cm⁻¹ are different, it can be determined that the compositions are different.

In the Examples 1 to 3, analytical models of fender liners using the foam body A and the foam body B were created as illustrated in Table 1.

**Table 1**

| | Example 1 | Example 2 | Example 3 |
|---|---|---|---|
| Fender liner front portion | Foam body A | Foam body B | Foam body A |
| Fender liner rear portion | Foam body A | Foam body B | Foam body B |

As illustrated in Table 1, the analytical model of the fender liners of Example 1 were created using only the foam body A. The analytical model of the fender liners of Example 2 were created using only foam body B. The analytical model of the fender liners of Example 3 were created with the foam body A being used for the front portion (frontward portion of the vehicle relative to the top of the tire) and with the foam body B being used for the rearward portion of the tire relative to the top of the tire.

In Examples 1 to 3, the relationship between the frequency of the sound waves and the magnitude of the sound waves observed in the vicinity of the fender line while a vehicle is traveling was analyzed using the finite element method. The analysis conditions were as follows:
- Acoustic boundary conditions: the ground and the surface of the tire were set as the total reflection boundaries and the fender liner was set as the admittance boundary based on the normal incident sound absorption coefficient.
- Air: The sound speed was set to 340 m/s and the density was set to 1.225 kg/m³.
- Tire: The diameter was configured to be 636 mm and the width was configured to be 226 mm. The tire was configured to have no tread pattern.
- Input sound source: The front portion and the rear portion of the contact surface at which the surface of the tire and the ground come into contact with each other were set as the point sources. The magnitude of each of the sounds at these two point sources was set based on the noise level values observed by an ambient microphone while the tire was rotated at a constant speed in a laboratory. The tire speed was equivalent to a vehicle speed of 50 km/h.
- Fender liner shape: A typical shape was used.

The analysis results of Example 1 are indicated in Table 2, the analysis results of Example 2 are indicated in Table 3, and the analysis results of Example 3 are indicated in Table 4. In Tables 2 to 4, L_{max_}f is the maximum noise level observed at the front portion of the fender liner, L_{max_}r is the maximum noise level observed at the rear portion of the fender liner. Lₘₐₓ is the maximum noise level observed along the entirety of the fender liner.

**[TABLE 2]**

| | Example 1 | | |
|---|---|---|---|
| Frequency [Hz] | Lₘₐₓ_f [dB] | Lₘₐₓ_r [dB] | Lₘₐₓ [dB] |
| 800 | 88.00 | 86.57 | 88.00 |
| 1000 | 90.09 | 87.09 | 90.09 |
| 1250 | 95.17 | 88.19 | 95.17 |
| 2000 | 87.05 | 90.39 | 90.39 |
| 3150 | 86.06 | 87.85 | 87.85 |

**[TABLE 3]**

| | Example 2 | | |
|---|---|---|---|
| Frequency [Hz] | Lₘₐₓ_f [dB] | Lₘₐₓ_r [dB] | Lₘₐₓ [dB] |
| 800 | 89.40 | 88.15 | 89.40 |
| 1000 | 90.89 | 88.34 | 90.89 |
| 1250 | 95.33 | 89.00 | 95.33 |
| 2000 | 85.96 | 89.63 | 89.63 |
| 3150 | 84.25 | 86.42 | 86.42 |

**[TABLE 4]**

| | Example 3 | | |
|---|---|---|---|
| Frequency [Hz] | Lₘₐₓ_f [dB] | Lₘₐₓ_r [dB] | Lₘₐₓ [dB] |
| 800 | 88.00 | 88.15 | 88.15 |
| 1000 | 90.09 | 88.34 | 90.09 |
| 1250 | 95.17 | 89.00 | 95.17 |
| 2000 | 87.05 | 89.63 | 89.63 |
| 3150 | 86.06 | 86.42 | 86.42 |

It is evident from Table 2 to Table 4 that in a case where the frequency of the sound waves was 1,250 Hz or less, the magnitude of the sound waves (noise) was greater at the front portion of the fender liner than at the rear portion of the fender liner. In contrast to this, in a case where the frequency of the sound waves exceeded 1,250 Hz, the magnitude of the sound was greater at the rear portion of the fender liner than at the front portion of the fender liner.

The results of Table 2 to Table 4 are summarized in Table 5.

**[TABLE 5]**

| Frequency [Hz] | L0ₘₐₓ [dB] | Example 1 | | Example 2 | | Example 3 | |
|---|---|---|---|---|---|---|---|
| | | Lₘₐₓ [dB] | Lₘₐₓ-L0ₘₐₓ [dB] | Lₘₐₓ [dB] | Lₘₐₓ-L0ₘₐₓ [dB] | Lₘₐₓ [dB] | Lₘₐₓ-L0ₘₐₓ [dB] |
| 800 | 96.36 | 88.00 | -8.36 | 89.40 | -6.96 | 88.15 | -8.21 |
| 1000 | 95.45 | 90.09 | -5.36 | 90.89 | -4.56 | 90.09 | -5.36 |
| 1250 | 96.36 | 95.17 | -1.19 | 95.33 | -1.03 | 95.17 | -1.19 |
| 2000 | 94.55 | 90.39 | -4.16 | 89.63 | -4.92 | 89.63 | -4.92 |
| 3150 | 86.36 | 87.85 | 1.49 | 86.42 | 0.06 | 86.42 | 0.06 |

In Table 5, L0ₘₐₓ is the maximum noise level observed across the entirety of a fender liner in a case where the fender liner is composed of a dense resin sheet, specifically a polypropylene resin sheet. L0ₘₐₓ was analyzed for each frequency of the sound waves.

It is evident from Table 5 that in Example 3, unlike in Examples 1 and 2, the fender liner is composed of the foam body A and the foam body B having compositions different from each other, and thus the magnitude of noise of the fender liner in Example 3 can be reduced over a wide frequency band.

One or more embodiments and the like of the fender liner, the manufacturing method of the fender liner, and the vehicle of the disclosure are described above. However, the disclosure is not limited to the embodiments and the like. Various modifications, changes, substitutions, additions, deletions, or any combination of embodiments can be made within the scope set forth in the disclosure.

The first foam layer 11 and the second foam layer 12 having compositions different from each other may be arranged in the width direction of the tire 2 of the vehicle. In a case where the location at which the magnitude of the sound is greatest changes in the width direction of the tire 2 in accordance with the frequency of the sound waves, the magnitude of the noise can be reduced over a wide frequency band.

The present application claims priority under Japanese Patent Application No. 2020-194962 filed on November 25, 2020, with the Japanese Patent Office, and the entire contents of Japanese Patent Application No. 2020-194962 are incorporated herein by reference.

### DESCRIPTION OF THE REFERENCE NUMERALS

- 1: Fender liner
- 2: Tire
- 11: First foam layer
- 12: Second foam layer

## Claims

1. A fender liner that is to be placed in a curved shape along a periphery of a tire of a vehicle, the fender liner comprising:
a first foam layer that is formed by a first foam body; and
a second foam layer that is formed by a second foam body, the second foam body having a composition different from a composition of the first foam body,
wherein the first foam layer and the second foam layer are arranged in a circumferential direction of the tire.

2. The fender liner according to claim 1, further comprising a third foam layer formed by a third foam body having a mixed composition of the first foam body and the second foam body, the third foam layer being situated between the first foam layer and the second foam layer in the circumferential direction of the tire.

3. The fender liner according to claim 1 or 2, wherein the first foam body is a polyurethane foam body, a polyacrylic foam body, a melamine foam body, a rubber foam body, a polyolefin foam body, or a polyimide foam body.

4. A fender liner manufacturing method of manufacturing the fender liner of any one of claims 1 to 3, the fender liner manufacturing method comprising:
injecting both a first resin composition that forms the first foam body and a second resin composition that forms the second foam body into an inner space of a shaping mold;
foaming both the first resin composition and the second resin composition inside the inner space of the shaping mold; and
solidifying both the first resin composition and the second resin composition that were foamed in the inner space of the shaping mold, thereby forming the first foam layer and the second foam layer.

5. A vehicle, comprising:
a tire; and
the fender liner of any one of claims 1 to 3.

6. The vehicle according to claim 5, wherein the first foam layer has a lower peak frequency of a sound absorption coefficient than that of the second foam layer, and is situated closer to a front of the vehicle than the second foam layer is.

7. The vehicle according to claim 5 or 6, further comprising a water repellent layer on a facing surface of the fender liner, the facing surface facing the tire.

8. The vehicle according to claim 7, wherein the water repellent layer is breathable.
